# EUROPEAN PATENT SPECIFICATION

(11) **EP 3 517 417 B1**
(45) Date of publication and mention of the grant of the patent: **07.10.2020**
(21) Application number: 19153096.3
(22) Date of filing: 22.01.2019
(51) Int. Cl.: B62J 17/06

(54) **LEG SHIELD OF A STRADDLED VEHICLE**
BEINSCHUTZSCHILD EINES GRÄTSCHSITZFAHRZEUGS
BOUCLIER DE PROTECTION DES JAMBES POUR UN VÉHICULE À ENFOURCHER

(30) Priority: 25.01.2018 JP 2018010876; 15.05.2018 JP 2018093735
(43) Date of publication of application: 31.07.2019
(73) Proprietor: YAMAHA HATSUDOKI KABUSHIKI KAISHA, Iwata-shi, Shizuoka 438-8501 (JP)
(72) Inventor: RUEANGRIT, Kengkla, 10540 Samutprakarn (TH); VETVAKIN, Veerakrit, Iwata-shi, Shizuoka 438-8501 (JP)
(74) Representative: Grünecker Patent- und Rechtsanwälte PartG mbB

(56) References cited:
- EP-A1- 2 965 977
- EP-A1- 3 031 706
- EP-A1- 3 141 466
- CN-A- 103 963 884
- US-A1- 2006 021 814

## Description

The present invention relates to a straddled vehicle according to the preamble of independent claim 1. Such a straddled vehicle can be taken from the prior art document US 2006/0021814A1, which discloses the features of the preamble of claim 1.

Large scooter-type vehicles include a large front cover that covers the gauges and meters disposed in front of the handle. This configuration makes it possible to increase the size of the front lower portion cover that covers the surroundings of the front wheel. Since the size of the front lower portion cover can be increased, a footrest portion, which is needed to enable a relaxed riding posture, can be provided frontward from the foot board in the front lower portion cover. Moreover, the wheelbase of large scooter-type vehicles is large and, as such, it is easy to increase the size of the footrest portion in the vehicle front-back direction.

Additionally, in large scooter-type vehicles, the size of the front lower portion cover can be increased in the width direction in order to prevent interference with the front wheel. Accordingly, increasing the size of the front lower portion cover in the width direction makes it possible to provide a large footrest portion behind and above the front wheel. As a result, it is easy to increase the size of the footrest portion in the vehicle width direction.

Increasing the size of the footrest portion of a large scooter-type vehicle makes it possible to ensure comfort around the feet. However, in order to provide a large footrest portion behind and above the front wheel, the wheelbase of the vehicle must be large and the front lower portion cover that covers the footrest portion and the front wheel must be large.

In contrast, in small scooter-type vehicles, the entire vehicle is compact and the wheelbase is small. Moreover, the size of the front lower portion cover is reduced in order to make the vehicle compact. Accordingly, compared to large scooter-type vehicles, small scooter-type vehicles are more limited as to how much the size of the footrest space can be increased.

As such, it has been investigated a straddled vehicle that includes the compact body of a small scooter-type vehicle or the like while ensuring the comfort of a large scooter-type vehicle or the like. It may attempted to ensure comfort by providing a recessed portion that protrudes frontward in a lower portion of a leg shield so as to expand the footrest space frontward. However, while this configuration makes it possible to increase the size of the footrest portion, it is realized that the knees move frontward due to movement of the feet, resulting in the knees contacting the leg shield. Consequently, comfort around the knees is poor with this configuration. Moreover, with small scooter-type vehicles, riders sometimes sit on the front of the seat. In such cases, the knees of the rider contact the leg shield, thereby negatively affecting comfort around the knees.

To solve these problems, it has been investigated a structure that considers motion about the flexion center of the knee from the perspective of ergonomics. It has been conceived of moving the tips of the toes diagonally upward with the flexion center of the knees as axes to move the lower leg portions, instead of parallelly moving the lower leg portions by moving the knee flexion centers in the front-back direction. As a result, the it has been discovered that comfort around the feet and around the knees of the rider can be ensured without increasing the size of the vehicle body to enlarge the footrest space and while maintaining a compact vehicle body.

An object of the present invention is to provide a straddled vehicle which allows to improve comfort around the feet and comfort around the knees of the rider in a straddled vehicle while limiting increases in the size of the front cover.

According to the present invention said object is solved by a straddled vehicle having the features of independent claim 1. Preferred embodiments are laid down in the dependent claims.

A straddled vehicle according to one aspect includes a body frame, a steering device, a front wheel, a front cover, a seat, a rear cover, and a foot board. The body frame includes a head pipe and a down frame. The down frame extends downward from the head pipe. The steering device is rotatably supported by the head pipe. The front wheel is rotatably supported by the steering device. The front cover is disposed around the head pipe and the down frame. The seat is disposed behind the front cover. The rear cover is disposed below the seat. The foot board is disposed between the front cover and the rear cover.

The front cover includes front surface portion and a leg shield. The front surface portion is disposed in front of the head pipe. The leg shield is disposed behind the front surface portion. A lower portion of the leg shield includes a recessed portion recessed frontward. The foot board includes an inclined footrest portion disposed facing the recessed portion, and a rear footrest portion. In a vehicle side view, the inclined footrest portion is inclined frontward and upward to a greater degree than the rear footrest portion. The rear footrest portion is disposed behind the inclined footrest portion. The left leg shield includes a first inclined edge portion, a second inclined edge portion, and a third inclined edge portion. In the vehicle side view, the first inclined edge portion extends upward and rearward from the front end of the inclined footrest portion. In the vehicle side view, the second inclined edge portion extends upward and frontward from an upper end of the first inclined edge portion. In the vehicle side view, the third inclined edge portion extends upward and rearward from the upper end of the second inclined edge portion. In the vehicle side view, the front end of the inclined footrest portion is positioned downward from an upper end of the front wheel, and is disposed at a position that does not overlap with the front wheel. In the vehicle side view, an angle of inclination of the second inclined edge portion with respect to a horizontal direction is greater than an angle of inclination of the inclined footrest portion with respect to the horizontal direction.

With the straddled vehicle according to this aspect, the lower portion of the leg shield includes the recessed portion that is recessed frontward, and the foot board includes the inclined footrest portion disposed facing the recessed portion. This configuration makes it possible to expand the footrest space frontward. Since the footrest portion is inclined, parallel movement frontward of the knees together with the feet of the rider can be reduced compared to cases in which a flat footrest portion is provided. By placing the feet on the inclined footrest portion, the rider can move the tips of the toes diagonally upward with the flexion center of the knees as axes to move the lower leg portions. The configuration makes it possible to reduce front-back motion of the knees. Moreover, in the leg shield, the first inclined edge portion, the second inclined edge portion, and the third inclined edge portion are provided upward from the inclined footrest portion. This configuration makes it possible to expand the space between the leg shield and the knees. As a result, interference between the knees and the leg shield can be reduced. Thus, with the straddled vehicle according to this aspect, comfort around both the feet and around the knees of the rider can be ensured without increasing the size of the body to enlarge the footrest space and while maintaining a compact body.

In the vehicle side view, the front end of the inclined footrest portion is positioned downward from an upper end of the front wheel, and is disposed at a position that does not overlap with the front wheel. This configuration makes it possible to limit increases in the size of the lower portion of the front cover in the vehicle width direction while expanding the footrest space frontward. In the vehicle side view, the angle of inclination of the second inclined edge portion with respect to the horizontal direction is greater than the angle of inclination of the inclined footrest portion with respect to the horizontal direction. This configuration makes it possible to limit increases in the size of the front cover in the front-back direction while securing a large space around the knees.

The rear footrest portion has a shape that is flat throughout the vehicle width direction. This configuration facilitates mounting and dismounting. Additionally, this configuration makes it possible to secure expansive footrest space frontward by the inclined footrest portion, even when the front-back length of the flat rear footrest portion is shortened to reduce the size of the vehicle.

The front cover may include a front edge that, in the vehicle side view, extends rearward and downward from a front end of the front cover. In the vehicle side view, a portion of the front edge of the front cover, which is positioned upward from the upper end of the first inclined edge portion, may be positioned upward from an extended line of the inclined footrest portion. Thus, even with vehicles in which the front cover is small in the front-back direction, the comfort around the feet and the comfort around the knees can both be improved due to the inclined footrest portion and the first to third inclined edge portions.

In the vehicle side view, the front end of the front cover may be positioned rearward from the extended line of the inclined footrest portion. Thus, even with vehicles in which the front cover is small in the front-back direction, the comfort around the feet and the comfort around the knees can both be improved due to the inclined footrest portion and the first to third inclined edge portions.

In the vehicle side view, a distance in the vehicle front-back direction between the front end of the front cover and the front end of the inclined footrest portion may be less than a distance in an up-down direction between the front end of the front cover and an upper end of the front cover. Thus, even with vehicles in which the front cover is small in the front-back direction, the comfort around the feet and the comfort around the knees can both be improved due to the inclined footrest portion and the first to third inclined edge portions.

The front end of the inclined footrest portion may be positioned downward from the upper end of the front wheel, and upward from a rear end of the front wheel. By disposing the front end of the inclined footrest portion in this manner, the knees and the feet of the rider can be restrained from moving frontward together compared to a case in which the front end of the inclined footrest portion is disposed at a lower position.

In the vehicle side view, a distance in the vehicle front-back direction between a rear end of a connection portion of the leg shield and the foot board and a front end of a connection portion of the rear cover and the foot board is less than a distance in the vehicle front-back direction between the rear end of the connection portion of the leg shield and the foot board and the front end of the inclined footrest portion. Thus, even with vehicles in which the foot board is small in the vehicle front-back direction, the comfort around the feet and the comfort around the knees can both be improved due to the inclined footrest portion and the first to third inclined edge portions.

The front cover may include a front edge that, in the vehicle side view, extends rearward and downward from a front end of the front cover. In the vehicle side view, the front edge of the front cover may overlap with the front wheel at a position downward from the extended line of inclined footrest portion. This configuration makes it possible to limit increases in the size of the front cover in the vehicle width direction compared to a case in which the front edge of the front cover overlaps with the front wheel at a position upward from the extended line of the inclined footrest portion.

In the vehicle side view, the upper end of the second inclined edge portion may be positioned frontward from the front end of the inclined footrest portion. This configuration makes it possible to expand the space between the leg shield and the knees. As a result, the comfort around the knees can be improved.

In the vehicle side view, the upper end of the second inclined edge portion may be positioned upward from the front end of the front cover. This configuration makes it possible to expand the space between the leg shield and the knees. As a result, the comfort around the knees can be improved.

### BRIEF DESCRIPTION OF THE DRAWINGS

FIG. 1 is a side view of a straddled vehicle according to an embodiment;
FIG. 2 is a drawing of a front cover, as viewed from behind;
FIG. 3 is a perspective view of the straddled vehicle;
FIG. 4 is an enlarged side view of a front portion of the straddled vehicle;
FIG. 5 is a drawing illustrating a footrest structure of the straddled vehicle;
FIG. 6 is a drawing illustrating the footrest structure of the straddled vehicle;
FIG. 7 is an enlarged side view of a front portion of a body cover;
FIG. 8 is a drawing illustrating an example of a riding posture of the straddled vehicle according to the embodiment;
FIG. 9 is a drawing illustrating an example of a riding posture of a straddled vehicle according to Comparative Example 1;
FIG. 10 is a drawing illustrating an example of a riding posture of a straddled vehicle according to Comparative Example 2;
FIG. 11 is a drawing illustrating another example of the riding posture of the straddled vehicle according to the embodiment; and
FIG. 12 is a drawing illustrating an example of a riding posture of a straddled vehicle according to Comparative Example 3.

### DETAILED DESCRIPTION OF THE PREFERRED EMBODIMENTS

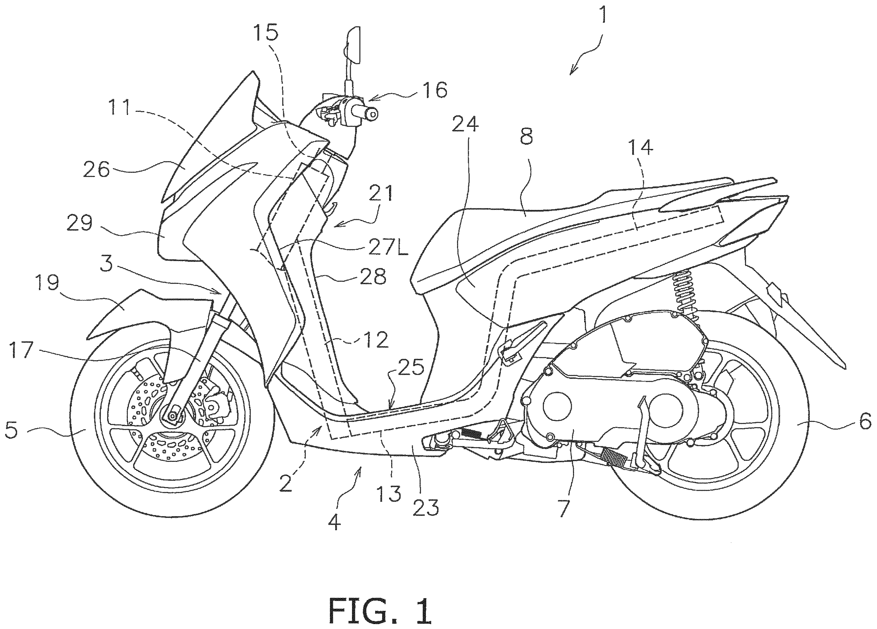

Hereinafter a straddled vehicle according to an embodiment will be described with reference to the attached drawings. FIG. 1 is a side view of a straddled vehicle 1 according to an embodiment. The straddled vehicle 1 includes a body frame 2, a steering device 3, a body cover 4, a front wheel 5, a rear wheel 6, a power unit 7, and a seat 8. The body frame 2 includes a head pipe 11, a down frame 12, a lower frame 13, and a rear frame 14.

The head pipe 11 is disposed at the vehicle center in a vehicle width direction. The down frame 12 extends downward from the head pipe 11. The lower frame 13 is connected to a lower portion of the down frame 12. The lower frame 13 extends rearward from the down frame 12. The rear frame 14 is connected to the lower frame 13. The rear frame 14 extends rearward and upward from the lower frame 13.

Note that, in this description, the term "extending in the front-back direction" is not limited to extending parallel to the front-back direction. "Extending in the front-back direction" means that the smaller angle of the angles formed with the horizontal direction is 45° or less. That is, "extending in the front-back direction" includes cases when extending in directions inclined with respect to the horizontal direction. This definition is also applicable to the up-down direction and the left-right direction. Additionally, in this description, the term "connection" is not limited to direct connections and also encompasses indirect connections. Moreover, the term" connection" is not limited to fixing independent members to each other, but also encompasses a plurality of portions in a single member being continuous.

The steering device 3 is rotatably supported by the head pipe 11. The steering device 3 includes a steering shaft 15, a handle portion 16, and a suspension 17. The steering shaft 15 is inserted into the head pipe 11. The steering shaft 15 is rotatably supported by the head pipe 11. The handle portion 16 is connected to an upper portion of the steering shaft 15. The suspension 17 is connected to a lower portion of the steering shaft 15. The front wheel 5 is rotatably supported by the steering device 3. The front wheel 5 is rotatably supported by the suspension 17. A front fender 19 is disposed above the front wheel 5.

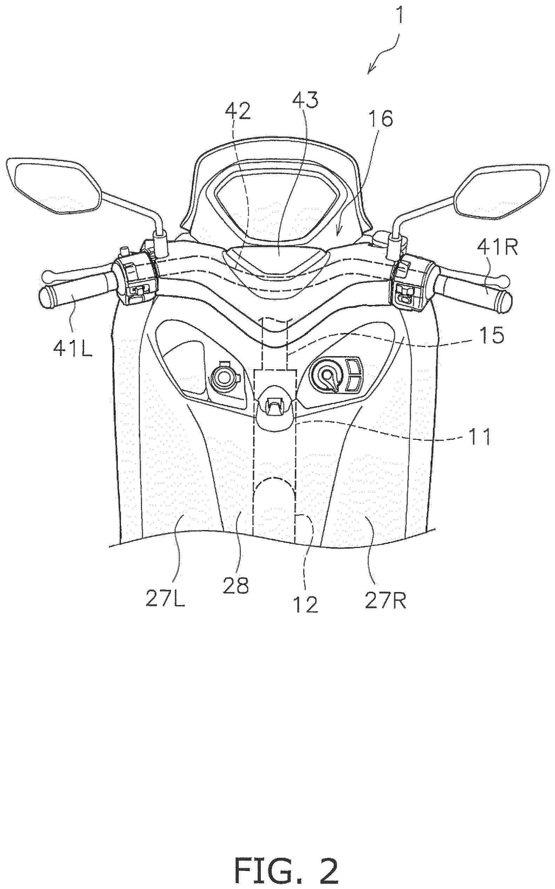

FIG. 2 is a drawing of a front cover 21, as viewed from behind. As illustrated in FIG. 2, the handle portion 16 includes a left grip 41L, a right grip 41R, a handlebar 42, and a handle cover 43. The left grip 41L and the right grip 41R are respectively attached to the left and right ends of the handlebar 42. The handle cover 43 covers the handlebar 42.

As illustrated in FIG. 1, the body cover 4 includes the front cover 21, a lower cover 23, and a rear cover 24. The front cover 21 is disposed around the head pipe 11 and the down frame 12. The front cover 21 surrounds the front, rear, left and right of the head pipe 11 and the down frame 12. The front cover 21 includes front surface portion 26, a left leg shield 27L, a right leg shield 27R, and a center back surface portion 28. The front surface portion 26 is disposed in front of the head pipe 11. A headlight 29 is provided in the front surface portion 26. The left and right leg shields 27L and 27R and the center back surface portion 28 are disposed behind the front surface portion 26.

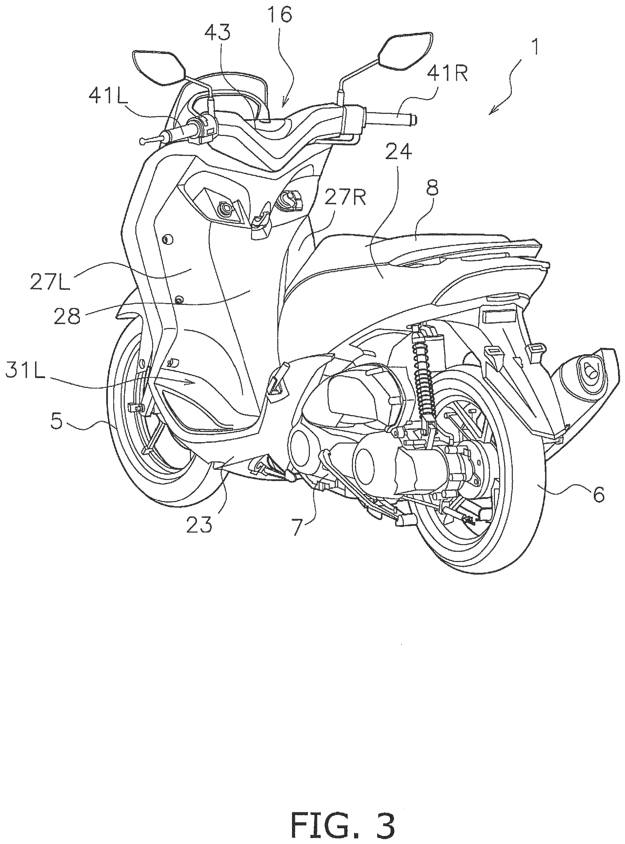

FIG. 3 is a perspective view of the straddled vehicle 1. As illustrated in FIGS. 2 and 3, the left leg shield 27L is disposed to the left of the center back surface portion 28. The right leg shield 27R is disposed to the right of the center back surface portion 28.

The center back surface portion 28 is disposed rearward from the head pipe 11 and the down frame 12. The center back surface portion 28 overlaps the head pipe 11 and the down frame 12 in a vehicle back view. The center back surface portion 28 has a shape that protrudes rearward from the left and right left leg shields 27L and 27R.

The rear cover 24 is disposed downward from the seat 8. The rear cover 24 is disposed on both sides of the rear frame 14. The lower cover 23 is disposed between the rear cover 24 and the front cover 21. The lower cover 23 is disposed above and on both sides of the lower frame 13.

The lower cover 23 includes a foot board 25 on which the feet of the rider are placed. The foot board 25 is disposed above the lower cover 23. The foot board 25 is disposed between the front cover 21 and the rear cover 24. The foot board 25 has a flat shape over the entire vehicle width direction. However, the foot board 25 may, for example, have fine irregularities to prevent slipping.

The seat 8 is disposed behind the front cover 21. The power unit 7 includes a motor such as an engine. The power unit 7 is disposed below the seat 8. The rear wheel 6 is rotatably supported by the power unit 7. A front end of the seat 8 is disposed frontward from the center in the front-back direction of the straddled vehicle 1. In other words, the front end of the seat 8 is disposed frontward from the center of the wheel base of the straddled vehicle 1.

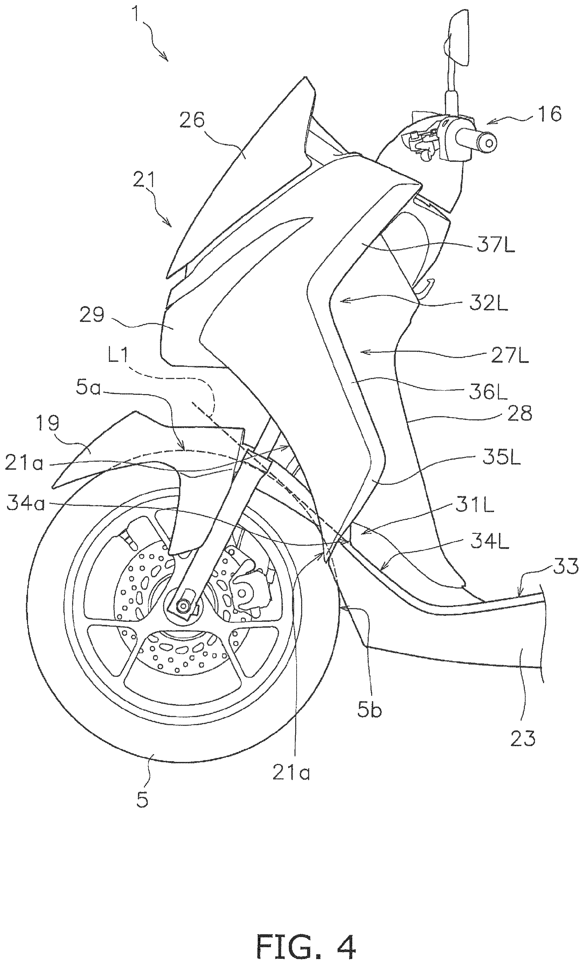

FIG. 4 is an enlarged side view of the front portion of the straddled vehicle 1. As illustrated in FIG. 4, the left leg shield 27L includes a first recessed portion 31L and a second recessed portion 32L. The first recessed portion 31L and the second recessed portion 32L are disposed in the lower portion of the left leg shield 27L. The second recessed portion 32L is disposed above the first recessed portion 31L. The first recessed portion 31L and the second recessed portion 32L each have a shape that is recessed frontward. The second recessed portion 32L is larger than the first recessed portion 31L in the up-down direction. The first recessed portion 31L is disposed downward from the seat 8. A portion of the second recessed portion 32L is positioned at the same height as the seat surface of the seat 8.

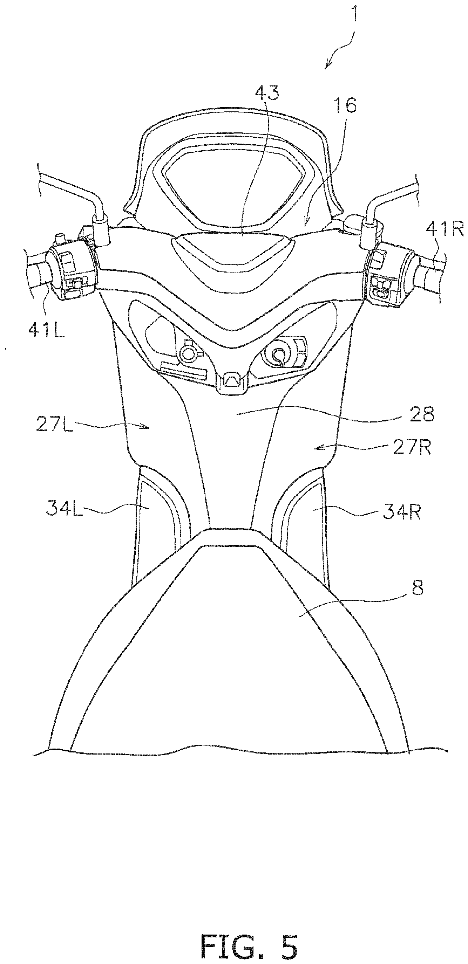

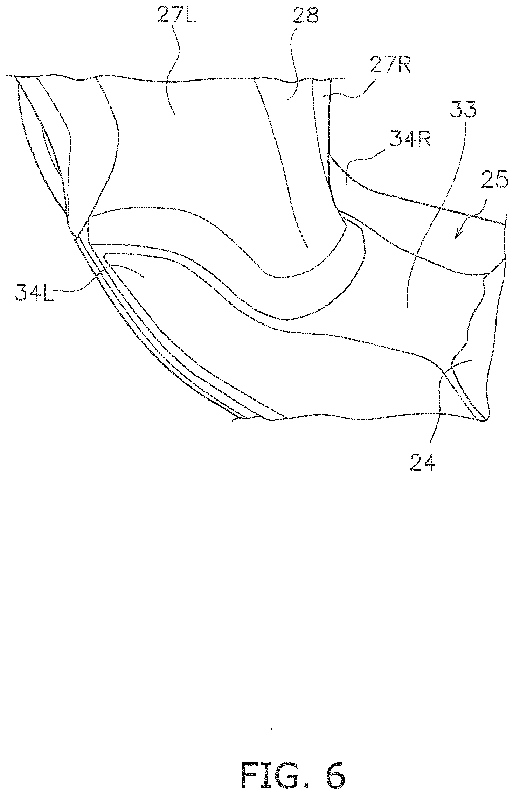

FIGS. 5 and 6 are drawings illustrating a footrest structure of the straddled vehicle 1. As illustrated in FIGS. 5 and 6, the foot board 25 includes a rear footrest portion 33, a left inclined footrest portion 34L, and a right inclined footrest portion 34R. The rear footrest portion 33, the left inclined footrest portion 34L, and the right inclined footrest portion 34R are portions where the feet of the rider are placed. The rear footrest portion 33 is disposed between the center back surface portion 28 and the rear cover 24. The rear footrest portion 33 has a shape that is flat throughout the vehicle width direction. At least a portion of the rear footrest portion 33 is positioned rearward from a rear end of the center back surface portion 28.

The left inclined footrest portion 34L and the right inclined footrest portion 34R extend frontward from the rear footrest portion 33. The left inclined footrest portion 34L is disposed rearward from the left leg shield 27L and to the left of the center back surface portion 28. The right inclined footrest portion 34R is disposed rearward from the right leg shield 27R and to the right of the center back surface portion 28.

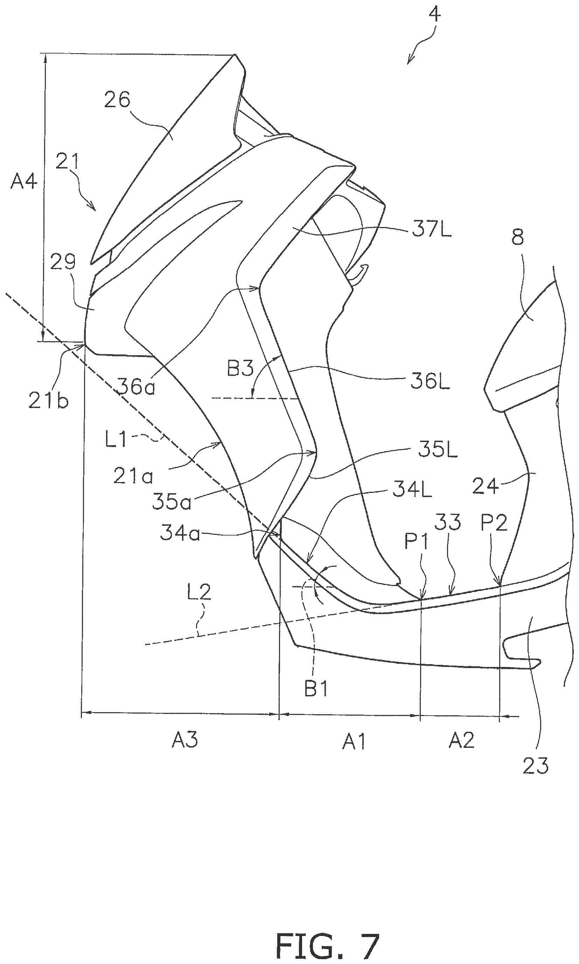

As illustrated in FIG. 4, the left inclined footrest portion 34L extends to a position frontward from the rear end of the center back surface portion 28, and is disposed facing the first recessed portion 31L. In a vehicle side view, the left inclined footrest portion 34L is inclined frontward and upward. In the vehicle side view, an imaginary extended line L1 of the left inclined footrest portion 34L does not overlap with the front wheel 5. In the vehicle side view, the left inclined footrest portion 34L is inclined frontward and upward to a greater degree than the rear footrest portion 33. Specifically, as illustrated in FIG. 7, in the vehicle side view, the left inclined footrest portion 34L is inclined frontward and upward to a greater degree than an extended line L2 of the rear footrest portion 33.

In the vehicle side view, a front end 34a of the left inclined footrest portion 34L is positioned downward from an upper end 5a of the front wheel 5, and is disposed at a position that does not overlap with the front wheel 5. The front end 34a of the left inclined footrest portion 34L is positioned downward from the upper end 5a of the front wheel 5, and upward from a rear end 5b of the front wheel 5. FIG. 7 is a side view illustrating a portion of the body cover 4. As illustrated in FIG. 7, a length A1 of the left inclined footrest portion 34L in the vehicle front-back direction is greater than a length A2 of the rear footrest portion 33 in the vehicle front-back direction.

In other words, the length A2 of the rear footrest portion 33 in the vehicle front-back direction is less than the length A1 of the left inclined footrest portion 34L in the vehicle front-back direction. Specifically, in the vehicle side view, a distance A2 in the vehicle front-back direction is less than a distance A1 in the vehicle front-back direction. Here, the distance A2 is the distance in the vehicle front-back direction between a rear end P1 of a connection portion of the center back surface portion 28 and the foot board 25 and a front end P2 of a connection portion of the rear cover 24 and the foot board 25. The distance A1 is the distance in the vehicle front-back direction between the rear end P1 of the connection portion of the left leg shield 27L and the foot board 25 and the front end 34a of the left inclined footrest portion 34L.

In the vehicle side view, a front end 21b of the front cover 21 is positioned rearward from the extended line L1 of the left inclined footrest portion 34L. In the vehicle side view, the front end 21b of the front cover 21 is positioned upward from the extended line L1 of the left inclined footrest portion 34L. In the vehicle side view, a distance A3 in the vehicle front-back direction between the front end 21b of the front cover 21 and the front end 34a of the left inclined footrest portion 34L is less than a distance A4 in the up-down direction between the front end 21b of the front cover 21 and an upper end of the front cover 21. Note that, in the present embodiment, the front end 21b of the front cover 21 is a portion included in the headlight 29. However, the front end 21b of the front cover 21 may be a portion separate from the headlight 29.

The left leg shield 27L includes a first inclined edge portion 35L, a second inclined edge portion 36L, and a third inclined edge portion 37L. In the vehicle side view, the first inclined edge portion 35L extends upward and rearward from the front end 34a of the left inclined footrest portion 34L. The first inclined edge portion 35L constitutes a portion of the first recessed portion 31L. In the vehicle side view, the second inclined edge portion 36L extends upward and frontward from an upper end 35a of the first inclined edge portion 35L. In the vehicle side view, the third inclined edge portion 37L extends upward and rearward from the upper end of the second inclined edge portion 36L. The second inclined edge portion 36L and the third inclined edge portion 37L constitute a portion of the second recessed portion 32L.

In the vehicle side view, an angle of inclination B1 of the left inclined footrest portion 34L differs from an angle of inclination B3 of the second inclined edge portion 36L. In the vehicle side view, the angle of inclination B3 of the second inclined edge portion 36L with respect to the horizontal direction is greater than the angle of inclination B1 of the left inclined footrest portion 34L with respect to the horizontal direction.

In the vehicle side view, the upper end 36a of the second inclined edge portion 36L is positioned frontward from the front end 34a of the left inclined footrest portion 34L. In the vehicle side view, the upper end 36a of the second inclined edge portion 36L is positioned upward from the front end 21b of the front cover 21. In the vehicle side view, the upper end 35a of the first inclined edge portion 35L is positioned downward from the front end 21b of the front cover 21.

The front cover 21 includes a front edge 21a that, in the vehicle side view, extends rearward and downward from the front end 21b of the front cover 21. The front edge 21a of the front cover 21 is positioned in front of the first recessed portion 31L. In the vehicle side view, the front edge 21a of the front cover 21 overlaps with the front wheel 5. In the vehicle side view, the portion of the front edge 21a of the front cover 21, which is positioned upward from the upper end 35a of the first inclined edge portion 35L, is positioned upward from the extended line L1 of the left inclined footrest portion 34L. In the vehicle side view, the front edge 21a of the front cover 21 overlaps with the front wheel 5 at a position downward from the extended line L1 of the left inclined footrest portion 34L.

In the aforementioned description, the left inclined footrest portion 34L that is disposed to the left of the center back surface portion 28 is described. However, except for having right-left symmetry with the left inclined footrest portion 34L, the right inclined footrest portion 34R disposed to the right of the center back surface portion 28 has the same structure as the left inclined footrest portion 34L. Additionally, except for having left-right symmetry with the left leg shield 27L, the right leg shield 27R has the same structure as the left leg shield 27L.

With the straddled vehicle 1 according to the present embodiment, the lower portion of the left leg shield 27L includes the first recessed portion 31L that is recessed frontward, and the foot board 25 includes the left inclined footrest portion 34L disposed facing the first recessed portion 31L. As a result, the footrest space can be expanded frontward. Since the left inclined footrest portion 34L is inclined frontward and upward to a greater degree than the flat rear footrest portion 33 that is provided in the foot board 25, movement frontward of the knees together with the feet of the rider can be reduced compared to cases in which a flat footrest portion is provided.

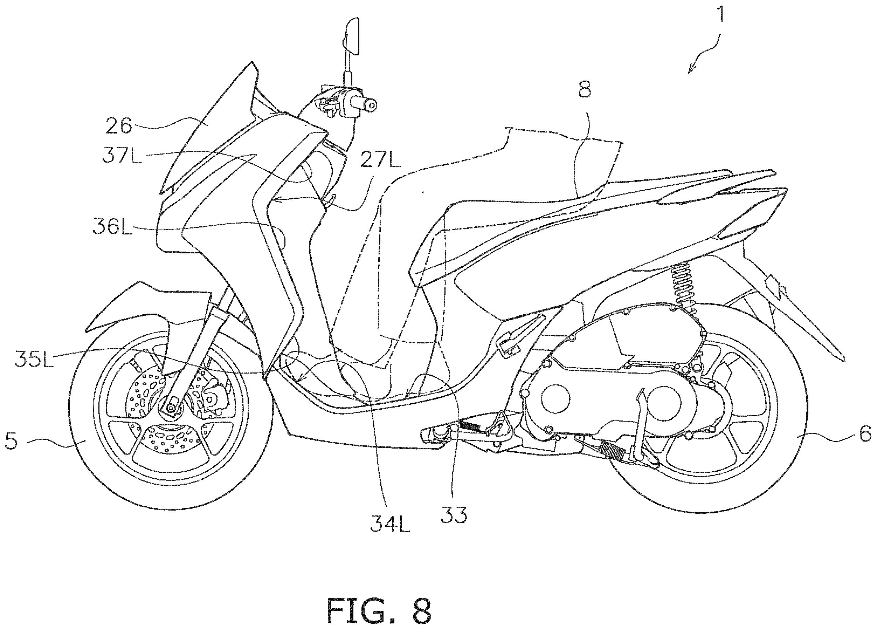

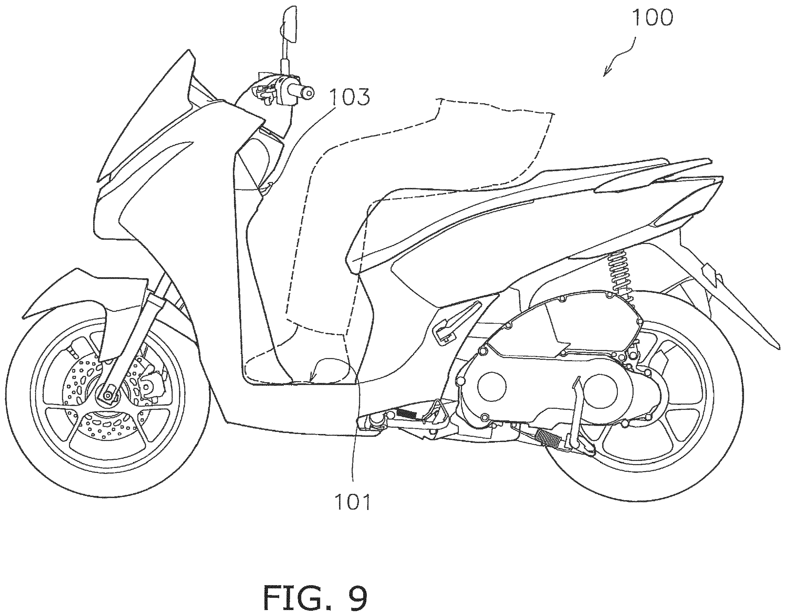

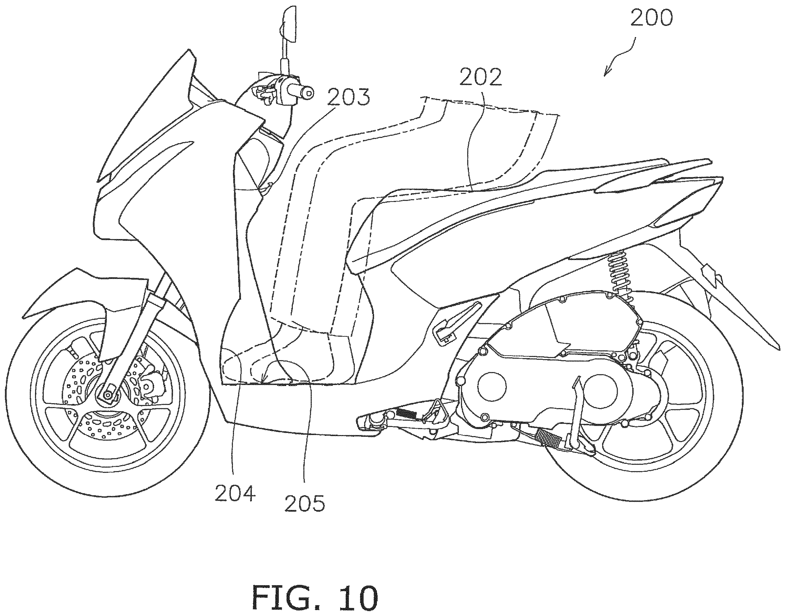

For example, FIG. 8 is a drawing illustrating a riding posture of the straddled vehicle 1 according to the present embodiment. FIG. 9 is a drawing illustrating an example of a riding posture of a straddled vehicle 100 according to Comparative Example 1. FIG. 10 is a drawing illustrating an example of a riding posture of a straddled vehicle 200 according to Comparative Example 2. With the straddled vehicle 100 according to Comparative Example 1, a recessed portion is not provided in a leg shield 103. With the straddled vehicle 200 according to Comparative Example 2, a recessed portion 204 is provided in a leg shield 203. A foot board 201 has a footrest portion 205 provided in the recessed portion 204, but the footrest portion 205 is horizontal.

As depicted by dashed lines in FIG. 8, with the straddled vehicle 1 according to the present embodiment, it is possible to sit at the rear of the seat while greatly extending a foot by placing a foot on the left inclined footrest portion 34L. In contrast, with the straddled vehicle 100 according to Comparative Example 1 illustrated in FIG. 9, a recessed portion is not provided in the lower portion of the leg shield 103. Consequently, the foot board 101 is small in the front-back direction, and the rider cannot greatly extend the feet while sitting.

With the straddled vehicle 200 according to Comparative Example 2 illustrated in FIG. 10, the footrest portion 205 is provided and, as such, a large amount of footrest space can be secured in the front-back direction. However, since the footrest portion 205 is horizontal, the ankles of the rider extend unnaturally when the rider sits in the same sitting position as illustrated in FIG. 8. Consequently, the rider sits on the front portion of the seat 202 as illustrated in FIG. 10. In this case, as depicted by the dashed line and the two-dot chain line in FIG. 10, the knees of the rider move frontward together with the feet of the rider and, as a result, the gap between the leg shield 203 and the knees decreases. Consequently, with the straddled vehicle 200 according to Comparative Example 2, the leg shield 203 is more likely to interfere with the knees of the rider.

In contrast, with the straddled vehicle 1 according to the present embodiment, as depicted by the dashed line and the two-dot chain line in FIG. 8, the feet can easily be placed on the left inclined footrest portion 34L by rotating the lower leg with the knee as the axis while seated at the same seating position. This configuration makes it possible to extend the feet frontward while reducing the front-back movement of the knees. Accordingly, a large gap between the left leg shield 27L and the knees can be maintained while extending the feet frontward. As a result, both the comfort around the feet and the comfort around the knees can be improved.

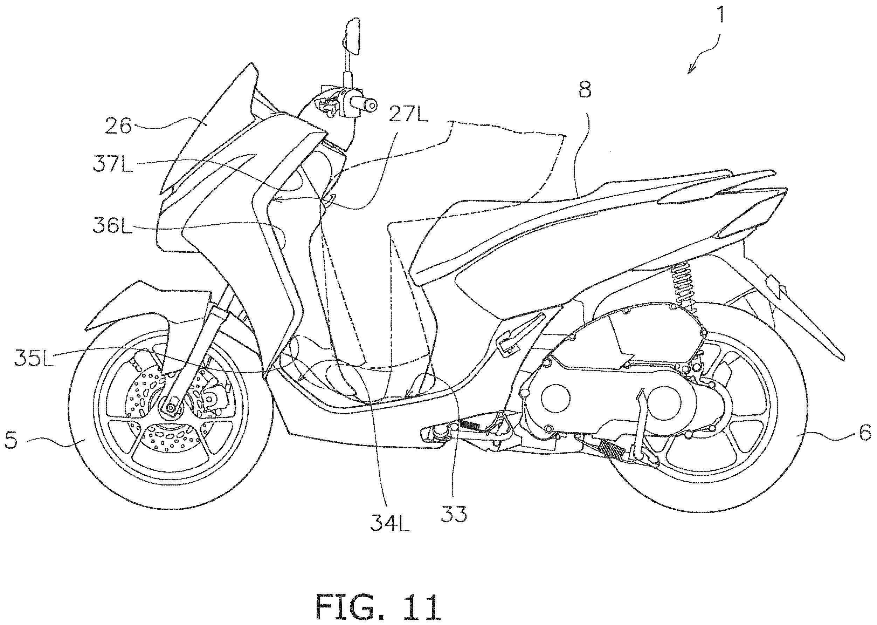

Moreover, in the left leg shield 27L, the first inclined edge portion 35L, the second inclined edge portion 36L, and the third inclined edge portion 37L are provided upward from the left inclined footrest portion 34L. This configuration makes it possible to expand the space between the left leg shield 27L and the knees. Accordingly, as, for example, illustrated in FIG. 11, since the space between the knees and the left leg shield 27L is expansive, the knees can be moved freely, even when the rider is sitting toward the front of the seat 8 and the knees of the rider are bent acutely.

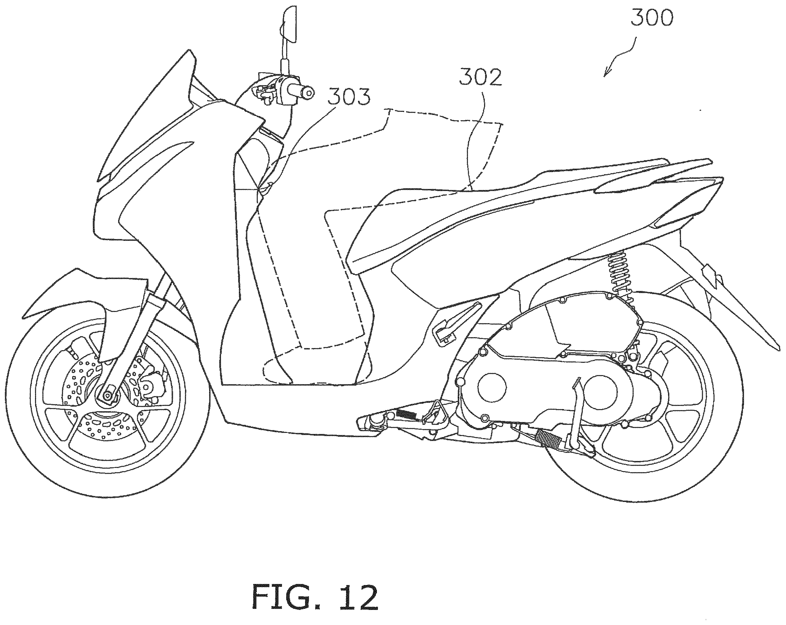

In contrast, with the straddled vehicle 300 according to Comparative Example 3 illustrated in FIG. 12, the second inclined edge portion 36L and the third inclined edge portion 37L are not provided in the leg shield 303. In this case, since the space between the knees and the left leg shield 303 is confined, the knees cannot be moved freely when the rider is sitting toward the front of the seat 302 and the knees of the rider are bent acutely. Thus, with the straddled vehicle 1 according to the present embodiment, the first inclined edge portion 35L, the second inclined edge portion 36L, and the third inclined edge portion 37L are provided in the left leg shield 27L and, as a result, the left leg shield 27L interfering with the knees can be reduced and the knees can be freely moved.

In the vehicle side view, the front end 34a of the left inclined footrest portion 34L is positioned downward from the upper end 5a of the front wheel 5, and is disposed at a position that does not overlap with the front wheel 5. This configuration makes it possible to limit increases in the size of the lower portion of the front cover 21 in the vehicle width direction while expanding the footrest space frontward. In the vehicle side view, the angle of inclination B3 of the second inclined edge portion 36L with respect to the horizontal direction is greater than the angle of inclination B1 of the left inclined footrest portion 34L with respect to the horizontal direction. This configuration makes it possible to limit increases in the size of the front cover 21 in the front-back direction while securing a large space around the knees.

The foot board 25 has a shape that is flat throughout the vehicle width direction. This configuration facilitates mounting and dismounting. Additionally, this configuration makes it possible to secure expansive footrest space frontward by the left inclined footrest portion 34L, even when the front-back length of the flat foot board 25 is shortened to reduce the size of the vehicle.

With the straddled vehicle 1 according to the present embodiment, the size of the front cover 21 in the vehicle front-back direction is reduced. For example, in the vehicle side view, the portion of the front edge 21a of the front cover 21, which is positioned upward from the upper end 35a of the first inclined edge portion 35L, is positioned upward from the extended line L1 of the left inclined footrest portion 34L. In the vehicle side view, the front end 21b of the front cover 21 is positioned rearward from the extended line L1 of the left inclined footrest portion 34L. In the vehicle side view, the distance A3 in the vehicle front-back direction between the front end 21b of the front cover 21 and the front end 34a of the left inclined footrest portion 34L is less than the distance A4 in the up-down direction between the front end 21b of the front cover 21 and the upper end of the front cover 21. This configuration makes it difficult to secure footrest space and space around the knees in vehicles in which the front cover 21 is small in the vehicle front-back direction. However, with the straddled vehicle 1 according to the present embodiment, the comfort around the feet and the comfort around the knees can both be improved due to the left inclined footrest portion 34L and the first to third inclined edge portions 35L to 37L.

The front end 34a of the left inclined footrest portion 34L is positioned downward from the upper end 5a of the front wheel 5, and upward from the rear end 5b of the front wheel 5. By disposing the front end 34a of the left inclined footrest portion 34L in this manner, the knees and the feet of the rider can be restrained from moving frontward together compared to a case in which the front end 34a of the left inclined footrest portion 34L is disposed at a lower position.

In the vehicle side view, the front edge 21a of the front cover 21 overlaps with the front wheel 5 at a position downward from the extended line L1 of the left inclined footrest portion 34L. This configuration makes it possible to limit increases in the size of the front cover 21 in the vehicle width direction compared to a case in which the front edge 21a of the front cover 21 overlaps with the front wheel 5 at a position upward from the extended line L1 of the left inclined footrest portion 34L.

In the vehicle side view, the distance A2 in the vehicle front-back direction is less than a distance A1 in the vehicle front-back direction. Here, the distance A2 is the distance in the vehicle front-back direction between the rear end P1 of the connection portion of the left leg shield 27L and the foot board 25 and the front end P2 of the connection portion of the rear cover 24 and the foot board 25. The distance A1 is the distance in the vehicle front-back direction between the rear end P1 of the connection portion of the left leg shield 27L and the foot board 25 and the front end 34a of the left inclined footrest portion 34L. Thus, even with vehicles in which the foot board 25 is small in the vehicle front-back direction, the comfort around the feet and the comfort around the knees can both be improved due to the left inclined footrest portion 34L and the first to third inclined edge portions 35L to 37L.

In the vehicle side view, the upper end 36a of the second inclined edge portion 36L is positioned frontward from the front end 34a of the left inclined footrest portion 34L. This configuration makes it possible to expand the space between the left leg shield 27L and the knees. As a result, the comfort around the knees can be improved.

In the vehicle side view, the upper end 36a of the second inclined edge portion 36L is positioned upward from the front end 21b of the front cover 21. This configuration makes it possible to expand the space between the left leg shield 27L and the knees. As a result, the comfort around the knees can be improved.

The same advantageous effects can be obtained for the right inclined footrest portion 34R as described for the left inclined footrest portion 34L. Additionally, the same advantageous effects can be obtained for the right leg shield 27R as described for the left leg shield 27L.

While an embodiment according to the present teaching has been described, the present teaching should not be construed as being limited thereto, and various types of modifications may be made without departing from the spirit or scope of the general concept of the teaching defined by the appended claims.

The straddled vehicle 1 is not limited to a scooter-type vehicle and may be a different vehicle such as a moped. The shape of the body frame 2 may be changed. The number of rear wheels 6 is not limited to 1, and may be 2 or more. The power unit 7 is not limited to an engine and may include an electric motor.

## Claims

1. A straddled vehicle, comprising:
a body frame (2) including a head pipe (11) and a down frame (12) extending downward from the head pipe (11);
a steering device (3) rotatably supported by the head pipe (11);
a front wheel (5) rotatably supported by the steering device (3);
a front cover (21) disposed around the head pipe (11) and the down frame (12);
a seat (8) disposed behind the front cover (21);
a rear cover (24) disposed below the seat (8); and
a foot board (25) disposed between the front cover (21) and the rear cover (24); wherein the front cover (21) includes
a front surface portion (26) disposed in front of the head pipe (11), and
a leg shield (27L) disposed behind the front surface portion (26),
a lower portion of the leg shield (27L) includes a recessed portion (31L) recessed frontward,
the foot board (25) includes an inclined footrest portion (34L) disposed facing the recessed portion (31L), and a rear footrest portion (33) disposed behind the inclined footrest portion (34L),
in a vehicle side view, the inclined footrest portion (34L) is inclined frontward and upward,
the leg shield (27L) includes
a first inclined edge portion (35L) that, in the vehicle side view, extends upward and rearward from a front end (34a) of the inclined footrest portion (34L),
a second inclined edge portion (36L) that, in the vehicle side view, extends upward and frontward from an upper end (35a) of the first inclined edge portion (35L), and
a third inclined edge portion (37L) that, in the vehicle side view, extends upward and rearward from an upper end (36a) of the second inclined edge portion (36L),
in the vehicle side view, the front end (34a) of the inclined footrest portion (34L) is positioned downward from an upper end (5a) of the front wheel (5), and is disposed at a position that does not overlap with the front wheel (5), and
in the vehicle side view, an angle of inclination (B3) of the second inclined edge portion (36L) with respect to a horizontal direction is greater than an angle of inclination (B1) of the inclined footrest portion (34L) with respect to the horizontal direction,
**characterized in that** the rear footrest portion (33) has a shape that is flat throughout a vehicle width direction, wherein in the vehicle side view, a distance (A2) in the vehicle front-back direction between a rear end (P1) of a connection portion of the leg shield (27L) and the foot board (25) and a front end (P2) of a connection portion of the rear cover (24) and the foot board (25) is less than a distance (A1) in the vehicle front-back direction between the rear end (P1) of the connection portion of the leg shield (27L) and the foot board (25) and the front end (34a) of the inclined footrest portion (34L).

2. The straddled vehicle according to claim 1, **characterized in that** the front cover (21) includes a front edge (21a) that, in the vehicle side view, extends rearward and downward from a front end (21b) of the front cover (21), and an extended line (L1) of the inclined footrest portion (34L) is inclined frontward and upward.

3. The straddled vehicle according to claim 2, **characterized in that** in the vehicle side view, a portion of the front edge (21a) of the front cover (21), which is positioned upward from the upper end (35a) of the first inclined edge portion (35L), is positioned upward from an extended line (L1) of the inclined footrest portion (34L).

4. The straddled vehicle according to claim 2 or 3, **characterized in that** in the vehicle side view, the front end (21b) of the front cover (21) is positioned rearward from the extended line (L1) of the inclined footrest portion (34L).

5. The straddled vehicle according to any one of claims 1 to 4, **characterized in that** in the vehicle side view, a distance (A3) in a vehicle front-back direction between the front end (21b) of the front cover (21) and the front end (34a) of the inclined footrest portion (34L) is less than a distance (A4) in an up-down direction between the front end (21b) of the front cover (21) and an upper end of the front cover (21).

6. The straddled vehicle according to any one of claims 1 to 5, **characterized in that** in the vehicle side view, the front edge (21a) of the front cover (21) overlaps with the front wheel (5) at a position downward from the extended line (L1) of the inclined footrest portion (34L).

7. The straddled vehicle according to any one of claims 1 to 6, **characterized in that** the front end (34a) of the inclined footrest portion (34L) is positioned downward from the upper end (5a) of the front wheel (5), and upward from a rear end (5b) of the front wheel (5).

8. The straddled vehicle according to any one of claims 1 to 7, **characterized in that** in the vehicle side view, the upper end (36a) of the second inclined edge portion (36L) is positioned frontward from the front end (34a) of the inclined footrest portion (34L).

9. The straddled vehicle according to any one of claims 1 to 8, **characterized In that** in the vehicle side view, the upper end (36a) of the second inclined edge portion (36L) is positioned upward from the front end (21 b) of the front cover (21).

10. The straddled vehicle according to any one of claims 1 to 9, **characterized in that** in a vehicle side view, the rear footrest portion (33) is inclined rearward and upward, and the inclined footrest portion (34L) is inclined frontward and upward to a greater degree than the rear footrest portion (33).

## Patentansprüche

1. Ein Spreiz-Sitz-Fahrzeug, das umfasst:
einen Körper-Rahmen (2), der ein Kopf-Rohr (11) und eine Unterrahmen (12), der sich vom Kopf-Rohr (11) nach unten erstreckt, beinhaltet;
eine Lenk-Vorrichtung (3), die durch das Kopf-Rohr (11) drehbar gelagert ist;
ein Vorder-Rad (5), das drehbar von der Lenk-Vorrichtung (3) gelagert ist;
eine Vorder-Abdeckung (21), die um das Kopf-Rohr (11) und den Unterrahmen (12) herum positioniert ist;
einen Sitz (8), der hinter der Vorder-Abdeckung (21) positioniert ist;
eine Rück-Abdeckung (24), die unterhalb des Sitzes (8) positioniert ist; und
ein Fußbrett (25), das zwischen der Vorder-Abdeckung (21) und der Rück-Abdeckung (24) positioniert ist; wobei die Vorder-Abdeckung (21) beinhaltet
einen Vorder-Flächen-Abschnitt (26), der vor dem Kopf-Rohr (11) positioniert ist, und
ein Bein-Schild (27L), das hinter dem Vorder-Flächen-Abschnitt (26) positioniert ist,
ein unterer Teil des Bein-Schilds (27L) beinhaltet einen ausgenommenen Abschnitt (31L), der nach vorne ausgenommen ist,
das Fußbrett (25) beinhaltet einen geneigten Fuß-Absetz-Abschnitt (34L), der gegenüber dem ausgenommenen Abschnitt (31L) positioniert ist, und einen hinteren Fuß-Absetz-Abschnitt (33), der hinter dem geneigten Fuß-Absetz-Abschnitt (34L) positioniert ist, umfasst,
in der Fahrzeug-Seiten-Ansicht ist der geneigte Fuß-Absetz-Abschnitt (34L) nach vorne und oben geneigt,
der Bein-Schild (27L) beinhaltet
einen ersten geneigten Kanten-Abschnitt (35L), der, in der Fahrzeug-Seiten-Ansicht, sich von einem vorderen Ende (34a) des geneigten Fuß-Absetz-Abschnitts (34L) nach oben und hinten erstreckt,
einen zweiten geneigten Kanten-Abschnitt (36L), der, in der Fahrzeug-Seiten-Ansicht, sich von einem oberen Ende (35a) des ersten geneigten Kanten-Abschnitts (35L) nach oben und vorne erstreckt, und
einen dritten geneigten Kanten-Abschnitt (37L), der, in der Fahrzeug-Seiten-Ansicht, sich von einem oberen Ende (36a) des zweiten geneigten Kanten-Abschnitts (36L) nach oben und hinten erstreckt,
in der Fahrzeug-Seiten-Ansicht ist das vordere Ende (34a) des geneigten Fuß-Absetz-Abschnitts (34L) unterhalb von einem oberen Ende (5a) des Vorder-Rads (5) positioniert, und an einer Position positioniert, die nicht mit dem Vorder-Rad (5) überlappt, und
in der Fahrzeug-Seiten-Ansicht ist ein Winkel der Neigung (B3) des zweiten geneigten Kanten-Abschnitts (36L) in Bezug auf eine horizontale Richtung größer als ein Winkel der Neigung (B1) des geneigten Fuß-Absetz-Abschnitts (34L) in Bezug auf die horizontale Richtung,
**dadurch gekennzeichnet, dass** der hintere Fuß-Absetz-Abschnitt (33) eine Form hat, die über eine Fahrzeug-Breiten-Richtung hinweg flach ist, wobei in der Fahrzeug-Seiten-Ansicht ein Abstand (A2) in der Fahrzeug-Vorder-Rückwärts-Richtung zwischen einem hinteren Ende (P1) eines Verbindungs-Abschnitts des Bein-Schilds (27L) und des Fußbretts (25) und einem vorderen Ende (P2) eines Verbindungs-Abschnitts der Rück-Abdeckung (24) und dersFußbretts (25) kleiner ist als ein Abstand (A1) in der Fahrzeug-Vorder-Rückwärts-Richtung zwischen dem hinteren Ende (P1) des Verbindungs-Abschnitts des Bein-Schilds (27L) und des Fußbretts (25) und dem vorderen Ende (34a) des geneigten Fuß-Absetz-Abschnitts (34L).

2. Das Spreiz-Sitz-Fahrzeug nach Anspruch 1, **dadurch gekennzeichnet, dass** die Vorder-Abdeckung (21) eine Vorder-Kante (21a) beinhaltet, die, in der Fahrzeug-Seiten-Ansicht, sich von einem vorderen Ende (21b) der Vorder-Abdeckung (21) nach hinten und unten erstreckt, und eine verlängerte Linie (L1) des geneigten Fuß-Absetz-Abschnitts (34L) nach vorne und oben geneigt ist.

3. Das Spreiz-Sitz-Fahrzeug nach Anspruch 2, **dadurch gekennzeichnet, dass,** in der Fahrzeug-Seiten-Ansicht, ein Abschnitt der Vorder-Kante (21a) der Vorder-Abdeckung (21), der aufwärts vom oberen Ende (35a) des ersten geneigten Kanten-Abschnitts (35L) positioniert ist, aufwärts von einer verlängerten Linie (L1) des geneigten Fuß-Absetz-Abschnitts (34L) positioniert ist.

4. Das Spreiz-Sitz-Fahrzeug nach Anspruch 2 oder 3, **dadurch gekennzeichnet, dass,** in der Fahrzeug-Seiten-Ansicht, das vordere Ende (21b) der Vorder-Abdeckung (21) hinter der verlängerten Linie (L1) des geneigten Fuß-Absetz-Abschnitts (34L) positioniert ist.

5. Das Spreiz-Sitz-Fahrzeug nach einem der Ansprüche 1 bis 4, **dadurch gekennzeichnet, dass,** in der Fahrzeug-Seiten-Ansicht, ein Abstand (A3) in einer Fahrzeug-Vorder-Rückwärts-Richtung zwischen dem vorderen Ende (21b) der Vorder-Abdeckung (21) und dem vorderen Ende (34a) des geneigten Fuß-Absetz-Abschnitts (34L) kleiner ist als ein Abstand (A4) in einer Oben-Unten-Richtung zwischen dem vorderen Ende (21b) der Vorder-Abdeckung (21) und einem oberen Ende der Vorder-Abdeckung (21).

6. Das Spreiz-Sitz-Fahrzeug nach einem der Ansprüche 1 bis 5, **dadurch gekennzeichnet, dass,** in der Fahrzeug-Seiten-Ansicht, die Vorder-Kante (21a) der Vorder-Abdeckung (21) mit dem Vorder-Rad (5) an einer Stelle unterhalb der verlängerten Linie (L1) des geneigten Fuß-Absetz-Abschnitts (34L) überlappt.

7. Das Spreiz-Sitz-Fahrzeug nach einem der Ansprüche 1 bis 6, **dadurch gekennzeichnet, dass** das vordere Ende (34a) des geneigten Fuß-Absetz-Abschnitts (34L) unterhalb von dem oberen Ende (5a) des Vorder-Rades (5), und oberhalb von einem hinteren Ende (5b) des Vorder-Rades (5) positioniert ist.

8. Das Spreiz-Sitz-Fahrzeug nach einem der Ansprüche 1 bis 7, **dadurch gekennzeichnet, dass,** in der Fahrzeug-Seiten-Ansicht, das obere Ende (36a) des zweiten geneigten Kanten-Abschnitts (36L) vor dem vorderen Ende (34a) des geneigten Fuß-Absetz-Abschnitts (34L) positioniert ist.

9. Das Spreiz-Sitz-Fahrzeug nach einem der Ansprüche 1 bis 8, **dadurch gekennzeichnet, dass,** in der Fahrzeug-Seiten-Ansicht, das obere Ende (36a) des zweiten geneigten Kanten-Abschnitts (36L) oberhalb von dem vorderen Ende (21b) der Vorder-Abdeckung (21) positioniert ist.

10. Das Spreiz-Sitz-Fahrzeug nach einem der Ansprüche 1 bis 9, **dadurch gekennzeichnet, dass,** in einer Fahrzeug-Seiten-Ansicht, der hintere Fuß-Absetz-Abschnitt (33) nach hinten und oben geneigt ist, und der geneigte Fuß-Absetz-Abschnitt (34L) in größerem Maße als der hintere Fuß-Absetz-Abschnitt (33) nach vorne und oben geneigt ist.

## Revendications

1. Véhicule à enfourcher, comprenant :
un cadre de corps (2) comprenant un tube de tête (11) et un cadre inférieur (12) s'étendant vers le bas à partir du tube de tête (11);
un dispositif de direction (3) supporté en rotation par le tube de tête (11);
une roue avant (5) supportée en rotation par le dispositif de direction (3);
un couvercle frontal (21) disposé autour du tube de tête (11) et du cadre inférieur (12);
un siège (8) disposé derrière le capot avant (21);
un couvercle arrière (24) disposé sous le siège (8); et
un repose-pied (25) disposé entre la couverture avant (21) et la couverture arrière (24); dans lequel
le capot avant (21) comprend:
une partie de la surface avant (26) disposée devant le tube de tête (11), et
un bouclier de protection des jambes (27L) disposé derrière la partie de la surface frontale (26),
une partie inférieure du bouclier de protection des jambes (27L) comprend une partie en retrait (31L) en retrait vers l'avant,
le repose-pied (25) comprend une partie inclinée (34L) disposée en face de la partie en creux (31L), et une partie arrière (33) disposée derrière la partie inclinée (34L),
dans une vue latérale du véhicule, la partie inclinée du repose-pied (34L) est inclinée vers l'avant et vers le haut,
le bouclier de protection des jambes (27L) comprend
une première partie de bord inclinée (35L) qui, en vue latérale du véhicule, s'étend vers le haut et vers l'arrière à partir d'une extrémité avant (34a) de la partie inclinée du repose-pied (34L),
une deuxième partie de bord inclinée (36L) qui, en vue latérale du véhicule, s'étend vers le haut et vers l'avant à partir de l'extrémité supérieure (35a) de la première partie de bord inclinée (35L),
et
une troisième partie de bord inclinée (37L) qui, en vue latérale du véhicule, s'étend vers le haut et vers l'arrière à partir d'une extrémité supérieure (36a) de la deuxième partie de bord inclinée (36L), en vue latérale du véhicule, l'extrémité avant (34a) de la partie de repose-pied inclinée (34L) est positionnée vers le bas à partir d'une extrémité supérieure (5a) de la roue avant (5), et est disposée à une position qui ne chevauche pas la roue avant (5), et
dans la vue latérale du véhicule, un angle d'inclinaison (B3) de la deuxième partie de bord inclinée (36L) par rapport à une direction horizontale est supérieur à un angle d'inclinaison (B1) de la partie de repose-pied inclinée (34L) par rapport à la direction horizontale,
**caractérisé en ce que** la partie arrière du repose-pied (33) a une forme qui est plate dans le sens de la largeur du véhicule, où dans la vue latérale du véhicule, une distance (A2) dans la direction avant-arrière du véhicule entre une extrémité arrière (P1) d'une partie de connexion du bouclier de protection des jambes (27L) et du repose-pied (25) et une extrémité avant (P2) d'une partie de connexion du couvercle arrière (24) et du repose-pied (25) est inférieure à une distance (A1) dans la direction avant-arrière du véhicule entre l'extrémité arrière (P1) de la partie de connexion du bouclier de protection des jambes (27L) et du repose-pied (25) et l'extrémité avant (34a) de la partie inclinée du repose-pied (34L).

2. Véhicule à enfourcher selon la revendication 1, **caractérisé en ce que** la couverture avant (21) comprend un bord avant (21a) qui, en vue latérale du véhicule, s'étend vers l'arrière et vers le bas à partir d'une extrémité avant (21b) de la couverture avant (21), et une ligne prolongée (L1) de la partie inclinée du repose-pied (34L) est inclinée vers l'avant et vers le haut.

3. Véhicule à enfourcher selon la revendication 2, **caractérisé en ce que**, dans la vue latérale du véhicule, une partie du bord avant (21a) de la couverture avant (21), qui est positionnée vers le haut à partir de l'extrémité supérieure (35a) de la première partie de bord inclinée (35L), est positionnée vers le haut à partir d'une ligne prolongée (L1) de la partie de repose-pied inclinée (34L).

4. Véhicule à enfourcher selon les revendications 2 ou 3, **caractérisé en ce que**, dans la vue latérale du véhicule, l'extrémité avant (21b) du couvercle avant (21) est positionnée vers l'arrière de la ligne prolongée (L1) de la partie inclinée du repose-pied (34L).

5. Véhicule à enfourcher selon l'une quelconque des revendications 1 à 4, **caractérisé en ce que**, en vue latérale du véhicule, une distance (A3) dans une direction avant-arrière du véhicule entre l'extrémité avant (21b) de la couverture avant (21) et l'extrémité avant (34a) de la partie inclinée du repose-pied (34L) est inférieure à une distance (A4) dans une direction haut-bas entre l'extrémité avant (21b) de la couverture avant (21) et une extrémité supérieure de la couverture avant (21).

6. Véhicule à enfourcher selon l'une quelconque des revendications 1 à 5, **caractérisé en ce que** dans la vue latérale du véhicule, le bord avant (21a) de la couverture avant (21) chevauche la roue avant (5) à une position vers le bas à partir de la ligne prolongée (L1) de la partie inclinée du repose-pied (34L).

7. Véhicule à enfourcher selon l'une quelconque des revendications 1 à 6, **caractérisé en ce que** l'extrémité avant (34a) de la partie inclinée du repose-pied (34L) est positionnée vers le bas à partir de l'extrémité supérieure (5a) de la roue avant (5), et vers le haut à partir d'une extrémité arrière (5b) de la roue avant (5).

8. Véhicule à enfourcher selon l'une quelconque des revendications 1 à 7, **caractérisé en ce que** dans la vue latérale du véhicule, l'extrémité supérieure (36a) de la deuxième partie de bord inclinée (36L) est positionnée vers l'avant à partir de l'extrémité avant (34a) de la partie de repose-pied inclinée (34L).

9. Véhicule à enfourcher selon l'une quelconque des revendications 1 à 8, **caractérisé en ce que**, dans la vue latérale du véhicule, l'extrémité supérieure (36a) de la deuxième partie de bord inclinée (36L) est positionnée vers le haut à partir de l'extrémité avant (21 b) de la couverture avant (21).

10. Véhicule à enfourcher selon l'une quelconque des revendications 1 à 9, **caractérisé en ce que**, dans une vue latérale du véhicule, la partie arrière du repose-pied (33) est inclinée vers l'arrière et vers le haut, et la partie inclinée du repose-pied (34L) est inclinée vers l'avant et vers le haut dans une plus grande mesure que la partie arrière du repose-pied (33).
